# EUROPÄISCHE PATENTSCHRIFT

(11) **EP 4 008 527 B1**
(45) Veröffentlichungstag und Bekanntmachung des Hinweises auf die Patenterteilung: **26.06.2024**
(21) Anmeldenummer: 20212232.1
(22) Anmeldetag: 07.12.2020
(51) Int. Cl.: B29C 65/10, B29C 65/20, B29C 65/30, B29C 65/72, B29L 7/00

(54) **VERWENDUNG EINER SCHWEISSVORRICHTUNG**
USE OF A WELDING DEVICE
UTILISATION D'UN DISPOSITIF DE SOUDAGE

(43) Veröffentlichungstag der Anmeldung: 08.06.2022
(73) Patentinhaber: Herz Austria Gesellschaft m.b.H, 6141 Schönberg (AT)
(72) Erfinder: RAUTER, Markus, 6145 Navis (AT); HÖRTNAGL, Thomas, 6143 Pfons (AT)
(74) Vertreter: Torggler & Hofmann Patentanwälte - Innsbruck

(56) Entgegenhaltungen:
- WO-A1-96/00881
- DE-A1- 3 616 462
- DE-C1- 3 921 711
- JP-A- H11 115 054
- JP-A- 2008 030 228

## Beschreibung

Die vorliegende Erfindung betrifft Verwendung einer Schweißvorrichtung zum Verschweißen von thermoplastischen Kunststofflagen mit den Merkmalen des Oberbegriffs des Anspruchs 1.

Entsprechende Vorrichtungen können umfassen:
- eine Heizvorrichtung mit wenigstens einer Heizfläche, wobei die Schweißvorrichtung dazu ausgebildet ist, die Kunststofflage durch Kontaktwärmeübertragung zwischen der wenigstens einen Heizfläche und den Kunststofflagen zu erhitzen,
- eine Fügevorrichtung, vorzugsweise mit wenigstens zwei Druckrollen, wobei die Fügevorrichtung dazu ausgebildet ist zum Fügen der Kunststofflagen eine Druckkraft auf die Kunststofflagen auszuüben.

Des Weiteren kann eine erfindungsgemäße Schweißvorrichtung eine Einspannvorrichtung, vorzugsweise mit wenigstens zwei Druckrollen, aufweisen, wobei die Einspannvorrichtung zum Festlegen und Vorschieben der Schweißvorrichtung an den Kunststofflagen ausgebildet ist.

Entsprechende Schweißvorrichtungen werden beispielsweise zum Verschweißen von sich überlappenden Planen aus beschichtetem Gewebe, Folien und Dichtungsbahnen aus thermoplastischen Kunststoffen für Lastwägen, Zelte, Abdeckungen in der Landwirtschaft, Biotope, Schwimmbäder, Markisen, Bootsplanen, aufblasbaren Booten, Werbeplanen, den Tiefbau oder den Tunnelbau verwendet.

Hierfür werden zumeist zwei Kunststofflagen über eine Fügevorrichtung und/oder eine Einspannvorrichtung mit der Schweißvorrichtung in Eingriff gebracht, welche Schweißvorrichtung die thermoplastischen Kunststofflagen an einer Fügeseite (an welcher sie miteinander verschweißt werden sollen) mit Hilfe einer Heizvorrichtung erhitzt.

Nach der Erhitzung der thermoplastischen Kunststoffe werden diese über eine Fügevorrichtung aneinandergepresst, um mittels eines definierten Fügedrucks und der auftretenden Abkühlung der erhitzten Oberflächen miteinander zu schweißen.

Hierfür ist es aus dem Stand der Technik bekannt, sogenannte Heizkeile mit Heizflächen zu verwenden, an welchen Heizflächen die Kunststofflagen geführt werden, wobei diese Heizflächen über Kontaktheizung die thermoplastischen Kunststofflagen an der Kontaktfläche erhitzen.

Eine entsprechende Heizvorrichtung aus dem Stand der Technik ist beispielsweise durch die JP H11 115054 A, die WO 96/00881 A1, die JP 2008 030228 A, die DE 36 16 462 A1, die DE 39 21 711 C1, die GB 1,464,471 A1 oder die DE 20 2017 104745 U1 bekannt.

Bei der Anwendung im Tunnelbau oder Tiefbau werden Kunststofflagen an einer Tunnelinnenwand (oder sonstigen vertikal ausgerichteten Wänden) angebracht und verschweißt, um den Tunnelinnenraum gegenüber einer Feuchtigkeit der Umgebung zu schützen. Hierfür werden entsprechende Schweißvorrichtungen entlang des Durchmessers eines Tunnels (oder einer Außenwand des Tunnels) geführt, wobei zumeist zu Beginn der Verschweißung die Schweißvorrichtung an einer Seitenwand des Tunnels mit den zu verschweißenden Folien in Kontakt gebracht werden muss.

Nachdem die Schweißvorrichtung an die zu verschweißenden, thermoplastischen Kunststofflagen angebracht wurde und die Kunststofflagen zueinander ausgerichtet wurden, können die Kunststofflagen über die Schweißvorrichtung mit der Schweißvorrichtung verspannt werden.

Nachdem die Kunststofflagen in ihrer Lage ausgerichtet wurden und mit der Schweißvorrichtung verspannt wurden, kann der Schweißvorgang gestartet werden, wobei sich die Schweißvorrichtungen mit einem definierten Vorschub entlang der Fügezone an den Kunststofflagen bewegen und diese miteinander verschweißen kann.

Aus dem Stand der Technik ist es an sich bekannt, die Schweißvorrichtung und die Kunststofflagen miteinander über zwei Druckrollen zu verspannen, wobei diese Druckrollen zumeist angetrieben sind und auch als Vorschub der Schweißvorrichtung dienen.

Nachteilig dabei ist jedoch, dass die Kunststofflagen, welche zumeist große Dimensionen aufweisen und recht unhandlich sind, mit der Schweißvorrichtung in die gewünschte Lage ausgerichtet werden müssen und anschließend über die Druckrollen verspannt werden. Dies macht es nötig, dass zumindest zwei Kunststofflagen und die Schweißvorrichtung (also mindestens drei Objekte) zueinander ausgerichtet werden müssen und anschließend über die Schweißvorrichtung miteinander verspannt werden müssen. Dies stellt sich jedoch als Herausforderung für einen Bediener heraus und macht zumeist wenigstens eine zweite Hilfskraft erforderlich. Das gilt insbesondere bei der Anwendung im Tunnelbau und/oder Tiefbau, wobei das Schweißen zunächst senkrecht nach oben und dann über Kopf ausgeführt werden muss.

Weiters ergibt sich vor allem im Anwendungsbereich des Tunnelbaus und/oder Tiefbau eine recht hohe Feuchtigkeit des Umfeldes, wodurch die zu verschweißenden, thermoplastischen Kunststofflagen vor der Verschweißung oder bei der Verschweißung durch Kondensat oder vorliegendes Wasser aus der Umgebung feucht oder nass sind.

Durch die Vorrichtungen, welche im Stand der Technik bekannt sind, kann zwar einerseits die Feuchtigkeit der thermoplastischen Oberflächen durch die Erhitzung - genauer gesagt: eine Verdampfung - reduziert werden, jedoch kann die verdampfte Feuchtigkeit aufgrund des Platzmangels nicht rechtzeitig entweichen, sodass die Qualität der Verschweißung durch den Wasserdampf und die Feuchtigkeit leidet.

Wie bereits angedeutet, ist auch die Handhabbarkeit einer entsprechenden Schweißvorrichtung besonders im Anwendungsbereich eines Tunnelbaus und/oder Tiefbaus von höherer Wichtigkeit, da die Schweißvorrichtung im Einsatz - genauer gesagt: beim Ausrichten an den thermoplastischen Kunststofflagen - nicht nur im Horizontalen am Untergrund bewegt wird, sondern an einer Tunnelwand oder einer Tunneldecke, wodurch die Schweißvorrichtung im Vertikalen und auch über Kopf anzuordnen ist.

Aufgabe der vorliegenden Erfindung ist es, eine gegenüber dem Stand der Technik verbesserte Schweißvorrichtung anzugeben, bei welcher die beschriebenen Nachteile zumindest teilweise behoben werden und/oder eine verbesserte Anwendbarkeit im Tunnelbau und/oder Tiefbau generiert wird und/oder eine Bedienerfreundlichkeit erhöht wird.

Diese Aufgabe wird erfindungsgemäß mit Verwendung einer Schweißvorrichtung zum Verschweißen von thermoplastischen Kunststofflagen mit den Merkmalen des Anspruchs 1 gelöst.

Es ist erfindungsgemäß bei einer Verwendung der Schweißvorrichtung im Tunnelbau und/oder Tiefbau vorgesehen, dass in Bezug auf eine Vorschubrichtung vor der Heizvorrichtung eine Vorwärmevorrichtung vorgesehen ist, welche zum kontaktlosen Vorwärmen der Kunststofflage ausgebildet ist.

Durch eine entsprechende Vorwärmvorrichtung können vor der Heizvorrichtung bereits im Vorfeld der Schweißung Verunreinigungen, wie beispielsweise Flüssigkeiten, durch Erwärmung verdampft werden, wobei diese verdampfte Flüssigkeit noch genügend Zeit hat, sich von der Fügezone wegzubewegen, bevor die Kunststofflagen durch die Heizvorrichtung auf Fügetemperatur gebracht werden und durch die Fügevorrichtung aneinandergepresst werden.

Durch das Vorsehen einer Vorwärmevorrichtung kann somit die Schweißqualität wesentlich erhöht werden.

Ein weiterer Vorteil der Vorwärmevorrichtung besteht darin, dass die thermoplastischen Kunststofflagen bereits vor der Heizvorrichtung erwärmt werden, wodurch die Heizvorrichtung weniger Energieeintrag liefern muss, um die Kunststofflagen auf die gewünschte Fügetemperatur zu bringen.

Dies ergibt die Möglichkeit, dass eine Verschweißung mit einer höheren Vorschubbewegung durchgeführt werden kann und/oder die Heizvorrichtung mit einer verkleinerten Dimensionierung ausgelegt werden kann und/oder die Heizvorrichtung energieeffizienter arbeiten kann.

Wenn die Vorwärmvorrichtung beispielsweise als Heißluftsystem ausgebildet ist, können sogar Verunreinigungen von den thermoplastischen Kunststofflagen abgeblasen werden (bevor die thermoplastischen Kunststofflagen von der Heizvorrichtung erwärmt werden und gegebenenfalls diese Verunreinigungen von der Heizvorrichtung in die Kunststofflagen "eingebrannt" werden).

Im Zuge des vorliegenden Dokumentes ist die Vorschubrichtung als Richtung zu verstehen, in welche eine Schweißvorrichtung gegenüber den thermoplastischen Kunststofflagen bewegt wird, um eine Verschweißung herzustellen. So wird beispielsweise die Schweißvorrichtung in eine Richtung bewegt, in welcher zuerst ein Teilbereich der Kunststofflagen auf die Heizvorrichtung trifft und anschließend auf die Fügevorrichtung.

Eine erfindungsgemäße Schweißvorrichtung kann in den eingangs zum Stand der Technik beschriebenen Anwendungsgebieten ihren Einsatz finden.

Vorteilhafte Ausführungsformen der Erfindung sind anhand der abhängigen Ansprüche definiert.

Es kann vorgesehen sein, dass die Schweißvorrichtung eine Einspannvorrichtung, vorzugsweise mit wenigstens zwei Druckrollen, aufweist, wobei die Einspannvorrichtung zum Festlegen und Verschieben der Schweißvorrichtung an den thermoplastischen Kunststofflagen ausgebildet ist, wobei weiters eine von der Einspannvorrichtung separate Haltevorrichtung vorgesehen ist, welche dazu ausgebildet ist, die Schweißvorrichtung an eine der Kunststofflagen lösbar zu sichern.

Durch das Vorsehen einer Haltevorrichtung, welche die Schweißvorrichtung an einer Kunststofflage lösbar sichern kann, wird die Bedienung - genauer gesagt: das Anlegen der Schweißvorrichtung an eine Kunststofflage - für einen Bediener wesentlich vereinfacht.

So kann ein Bediener gemäß dieser Variante zunächst die Schweißvorrichtung an einer Kunststofflage anlegen - genauer gesagt: die Schweißvorrichtung an einer Kunststofflage sichern - und anschließend sich darum kümmern, eine zweite Kunststofflage gegenüber der Schweißvorrichtung und der ersten Kunststofflage auszurichten und sobald die zweite Kunststofflage ausgerichtet ist, die zweite Kunststofflage über die Einspannvorrichtung der Schweißvorrichtung mit der Schweißvorrichtung und der ersten Kunststofflage verspannen. Selbst dann, wenn die Kunststofflagen vertikal ausgerichtet sind, was, wie erwähnt, im Tunnelbau und/oder Tiefbau regelmäßig der Fall ist, braucht der Bediener die Schweißvorrichtung also nicht mehr halten, nachdem die Schweißvorrichtung an der ersten Kunststofflage gesichert ist.

Dies ergibt den wesentlichen Vorteil, dass durch nur einen Bediener die Schweißvorrichtung und die Kunststofflagen in ihrer Lage zueinander ausgerichtet werden können.

Weiters wird das Anlegen einer Schweißvorrichtung in einer Vertikalen oder annähernd vertikalen Stellung zum Bediener wesentlich erleichtert, da über die Haltevorrichtung die Schweißvorrichtung an einer der Kunststofflagen gehalten werden kann, wodurch der Bediener im Weiteren die Möglichkeit hat, sich auf die zweite Kunststofflage und die Anordnung zu konzentrieren, wobei über die Haltevorrichtung die Schweißvorrichtung an der ersten Kunststofflage gehalten wird und über die erste Kunststofflage in ihrer Lage positioniert wird (was einem Bediener das Arbeiten mit zwei freien Händen ermöglicht).

So kann durch die Haltevorrichtung die Schweißbewegung gegen Relativbewegungen zwischen der Schweißvorrichtung und der Kunststofflage lösbar gesichert werden.

Besonders bevorzugt ist dabei die Schweißvorrichtung über die Haltevorrichtung gegenüber einer Relativbewegung entgegen der Vorschubbewegung der Schweißvorrichtung zu der thermoplastischen Kunststofflage sicherbar.

Vorzugsweise kann vorgesehen sein, dass die Vorwärmvorrichtung wenigstens eine Heißluftzuführvorrichtung aufweist, welche dazu ausgebildet ist, erhitzte Luft zur Vorwärmung der Kunststofflagen an eine Oberfläche der Kunststofflagen zu leiten.

Vorteilhafterweise kann es vorgesehen sein, dass mittels einer Heißluftzuführvorrichtung heiße Luft zur Vorerwärmung an eine Oberfläche einer Kunststofflage geleitet wird, wobei durch den Luftstrom Verunreinigungen von der Oberfläche abgeblasen werden können, Flüssigkeiten verdampft werden können und verdampfte Flüssigkeiten von der Oberfläche abgeführt werden können.

Alternativ oder zusätzlich kann es vorgesehen sein, dass die Vorwärmvorrichtung einen Wärmestrahler oder ähnliche kontaktlose Wärmeübertragungsmittel aufweist.

Es kann vorgesehen sein, dass die Vorwärmvorrichtung
- wenigstens ein Gebläse, vorzugsweise wenigstens einen Axialventilator, zum Fördern eines Luftstroms und/oder
- wenigstens einen (beispielsweise elektrischen) Lufterhitzer, vorzugsweise beinhaltend elektrische Heizdrähte und/oder ein keramisches Heizelement, zum Erwärmen des Luftstroms aufweist.

Sozusagen kann die Vorwärmvorrichtung "Fön-ähnlich" aufgebaut sein, wobei Umgebungsluft angesaugt wird, über einen Luftwärmetauscher (beispielsweise elektrische Heizdrähte) erhitzt wird und anschließend über wenigstens ein Gebläse, vorzugsweise einen Axialventilator, an die thermoplastischen Kunststofflagen - genauer gesagt: die Oberflächen, welche miteinander verschweißt werden sollen - weitergeleitet wird.

Vorzugsweise kann vorgesehen sein, dass die Vorwärmvorrichtung mit der Heizvorrichtung bewegungsschlüssig verbunden und/oder verbindbar ist.

Es kann vorgesehen sein, dass die Vorwärmvorrichtung über eine Befestigungsvorrichtung an der Heizvorrichtung lösbar befestigbar ist oder die Vorwärmvorrichtung in ein Bauteil der Heizvorrichtung integriert ist.

Durch das bewegungsschlüssige Verbinden der Vorwärmvorrichtung mit der Heizvorrichtung kann es vorgesehen sein, dass ein Bediener über eine Bewegung der Vorwärmvorrichtung auch die Heizvorrichtung in ihrer Position verändern kann.

Vorzugsweise ist vorgesehen, dass die Vorwärmvorrichtung relativ zu einem Rahmen der Schweißvorrichtung zwischen einer Schweißstellung und einer Wartestellung bewegbar ist, wobei die Vorwärmvorrichtung in der Schweißstellung zum kontaktlosen Vorwärmen der Kunststofflagen ausgebildet ist und der Wartestellung von den Kunststofflagen weggerichtet ist.

Es kann vorgesehen sein, dass die Heizvorrichtung relativ zu einem Rahmen der Schweißvorrichtung zwischen einer Schweißstellung und einer Wartestellung bewegbar ist, wobei die Heizvorrichtung in einer Schweißstellung zur Kontaktwärmeübertragung zwischen wenigstens einer Heizfläche und einer Kunststofflage an wenigstens eine Kunststofflage mit wenigstens einer Heizfläche anlegbar ist und in der Wartestellung von den Kunststofflagen weggerichtet ist.

Vorzugsweise kann vorgesehen sein, dass die Vorwärmevorrichtung gemeinsam mit der Heizvorrichtung relativ zu einem Rahmen der Schweißvorrichtung zwischen der Schweißstellung und der Wartestellung bewegbar ist. Dies kann beispielsweise durch eine lösbare Befestigung der Vorwärmvorrichtung an der Heizvorrichtung ausgebildet sein.

Es kann beispielsweise vorgesehen sein, dass ein Haltegriff mit der Vorwärmvorrichtung und/oder der Heizvorrichtung verbunden ist, über welchen Haltegriff ein Bediener die Vorwärmvorrichtung und/oder die Heizvorrichtung zwischen einer Schweißstellung und einer Wartestellung bewegen kann.

Dass die Vorwärmvorrichtung und/oder die Heizvorrichtung dazu ausgebildet ist, eine Kunststofflage in einer Schweißstellung zu erwärmen und in einer Wartestellung von den Kunststofflagen weggerichtet ist, ist natürlich in einem eingespannten Zustand der Kunststofflagen in oder an der Schweißvorrichtung über die Fügevorrichtung und/oder die Haltevorrichtung und/oder die Einspannvorrichtung zu verstehen.

Vorzugsweise kann vorgesehen sein, dass die Heizvorrichtung zwei im Wesentlichen keilförmig zueinander angeordnete Heizflächen aufweist.

Es kann vorgesehen sein, dass eine erste Heizfläche der Heizvorrichtung im Wesentlichen eben ausgebildet ist und eine zweite Heizfläche im Wesentlichen bogenförmig ausgebildet ist. Alternativ kann auch vorgesehen sein, dass die erste und die zweite Heizfläche bogenförmig, eben oder abschnittsweise durch eine Kombination daraus ausgebildet sind.

Es kann vorgesehen sein, dass die im Wesentlichen keilförmig zueinander angeordneten Heizflächen dazu ausgebildet sind, wenigstens zwei Kunststofflagen an ihren Oberflächen zu führen und zu erwärmen, wobei am zusammenlaufenden Ende der Keilanordnung die erhitzten, thermoplastischen Kunststofflagen in Kontakt gebracht werden und vorzugsweise über die Fügevorrichtung aneinandergepresst werden, um eine Verschweißung herzustellen.

Durch die bogenförmige und die ebene Ausbildung der Heizflächen kann eine Erwärmungszeit einer Kunststofflage gesteuert werden. So ist beispielsweise eine Kunststofflage an einer bogenförmigen Oberfläche bei konstantem Vorschub länger mit der bogenförmigen Oberfläche in Kontakt als eine weitere thermoplastische Kunststofflage, welche bei gleicher Vorschubgeschwindigkeit an einer ebenen Oberfläche geführt wird.

Es kann vorgesehen sein, dass im horizontalen Einsatzgebiet der Schweißvorrichtung die erste Heizoberfläche als obere Heizfläche und die zweite Heizfläche als untere Heizfläche eines Heizkeiles ausgebildet ist ("oben" und "unten" in Bezug auf eine gewöhnliche horizontale Ausrichtung der Schweißvorrichtung).

Es kann vorgesehen sein, dass die Heizvorrichtung elektrisch ausgebildet ist und vorzugsweise wenigstens ein elektrisches Heizelement aufweist. Ein elektrisches Heizelement kann beispielswiese durch eine Heizpatrone ausgebildet sein. Jedoch sind auch keramische oder metallisch Heizelemente vorstellbar, welche einen rechteckigen, kreisförmigen, polygonalen oder flachen Querschnitt aufweisen.

So kann es beispielsweise vorgesehen sein, dass die Heizvorrichtung als Heizkeil ausgebildet ist, wobei im Heizkeil - genauer gesagt: in Ausnehmungen oder Bohrungen - wenigstens eine Heizpatrone angeordnet werden kann, welche über elektrische Widerstandsheizung Wärmeenergie in den Heizkeil einleitet, welcher sich erwärmt und an wenigstens einer Heizfläche diese Wärmeenergie durch Kontaktwärmeübertragung an wenigstens eine thermoplastische Kunststofflage weiterleitet.

Der Heizkeil kann einen metallischen Werkstoff und/oder einem keramischen Werkstoff aufweisen. Auch Ausführungsvarianten aus anderen wärmeleitenden Werkstoffen, Legierungen und wärmeleitenden Beschichtungen (beispielsweise metallisch und/oder keramisch) sind denkbar.

Es kann vorgesehen sein, dass die Haltevorrichtung wenigstens ein - vorzugsweise zylindrisch ausgebildetes - Halteelement aufweist, welches zwischen einer Haltestellung und einer Lösestellung bewegbar gelagert ist, wobei die Schweißvorrichtung in einer Haltestellung an einer der Kunststofflagen gegen Relativbewegungen - vorzugsweise entgegen einer Vorschubrichtung - zwischen der Schweißvorrichtung und der Kunststofflage gesichert ist. Es kann beispielsweise ein Anschlag vorgesehen sein, an welchem Anschlag das Halteelement in einer Lösestellung anstößt oder gehalten wird.

Vorzugsweise kann vorgesehen sein, dass das wenigstens eine Halteelement eine exzentrische Lagerung aufweist und ferner eine Gegenfläche vorgesehen ist, wobei das Halteelement und die Gegenfläche so angeordnet sind, dass und die Kunststofflage in der Haltestellung zwischen dem Halteelement und der Gegenfläche verklemmt, wenn die Kunststofflage zwischen dem Halteelement und der Gegenfläche angeordnet ist und relativ zur Schweißvorrichtung entgegen der Vorschubrichtung bewegt wird. Es sei an dieser Stelle auch an die nachfolgende Figurenbeschreibung und die Figuren verwiesen, wobei im näheren Detail auf die Stellungen des Halteelementes eingegangen wird.

Es kann vorgesehen sein, dass die Gegenfläche beispielsweise als Teil des Rahmens der Schweißvorrichtung ausgebildet ist, wobei über eine exzentrische Bewegung des Halteelementes das Halteelement in Richtung der Gegenfläche bewegt werden kann und eine Kunststofflage zwischen Gegenfläche und Halteelement verspannt werden kann, wobei über die exzentrische Lagerung eine Relativbewegung zwischen Schweißvorrichtung und Kunststofflage entgegen einer Vorschubrichtung gehemmt wird.

Weiters kann es auch vorgesehen sein, dass über die exzentrische Lagerung das Halteelement dermaßen mit einer Kunststofflage an der Gegenfläche verspannbar ist, dass durch eine Relativbewegung der Schweißvorrichtung gegenüber der Kunststofflage in Vorschubrichtung das Halteelement gelöst wird kann und in eine Lösestellung bewegbar ist.

Es kann vorgesehen sein, dass die Haltevorrichtung in eine Richtung auf den Anschlag federbelastet ist. Dadurch kann es vorgesehen sein, dass die Haltevorrichtung über eine Federbelastung am Anschlag in einer Lösestellung gesichert werden kann.

Es kann vorgesehen sein, dass die Haltevorrichtung in Richtung auf die Lösestellung federbelastet ist und zwischen der Haltestellung und der Lösestellung eine Totpunktlage gegenüber der Federbelastung vorliegt.

So kann es vorgesehen sein (über eine exzentrische Lagerung des Halteelementes), dass das Halteelement dermaßen federbelastet ist, dass es in einer Lösestellung gegenüber einem Anschlag federbelastet ist (und somit in einer Lösestellung gesichert ist), wobei das Haltelement durch Überführen in die Haltestellung eine Totpunktlage der Federbelastung überschreitet und anschließend wiederum durch (die gleiche oder eine separate) Federbelastung in einer Haltestellung gegenüber der thermoplastischen Kunststofflage und/oder der Gegenfläche federbelastet wird, wobei wiederum das Halteelement in einer Haltestellung in seiner Lage durch die Federbelastung gesichert wird.

Die Federbelastung kann beispielsweise durch ein Federelement, vorzugsweise eine Schraubenfeder, umgesetzt werden.

Die Haltevorrichtung kann wenigstens ein Betätigungselement aufweisen, wobei die Haltevorrichtung vorzugsweise durch das Betätigungselement zwischen einer Haltestellung oder einer Lösestellung bewegbar ist. Das Betätigungselement kann beispielsweise über einen Aktuator (beispielsweise einen elektrischen, hydraulischen oder pneumatischen Aktuator) oder ein durch den Bediener betätigbares Griffelement ausgeführt sein.

Vorzugsweise kann vorgesehen sein, dass die Fügevorrichtung und/oder die Einspannvorrichtung wenigstens zwei Druckförderelemente - vorzugsweise in Form der wenigstens zwei Druckrollen - aufweist, welche zwischen einer Öffnungsstellung und einer Schließstellung bewegbar gelagert sind, wobei die Fügevorrichtung und/oder die Einspannvorrichtung dazu ausgebildet ist, die Kunststofflagen in der Schließstellung aneinander zu pressen.

Es kann vorgesehen sein, dass über einen Exzenterhebel die Druckförderelemente zwischen einer Öffnungsstellung und einer Schließstellung bewegbar gelagert sind, wobei durch Betätigen des Exzenterhebels die Druckförderelemente zueinander in eine Schließstellung bringbar sind und beispielsweise einen Fügedruck auf die thermoplastischen Kunststofflagen ausüben können.

Es kann auch vorgesehen sein, dass ein Abstand der Druckförderelemente zueinander einstellbar ist, sodass unterschiedliche Anpressdrücke oder Lagendicken der zwischen den wenigstens zwei Druckförderelementen bewegten thermoplastischen Kunststofflagen einstellbar sind.

Es kann vorgesehen sein, dass die wenigstens zwei Druckförderelemente wenigstens einen - vorzugsweise über ein Getriebe mit den wenigstens zwei Druckförderelementen verbundenen - Antrieb aufweisen, wobei die wenigstens zwei Druckförderelemente durch den wenigstens einen Antrieb gegenläufig zueinander in Richtung einer Vorschubbewegung der Schweißvorrichtung antreibbar sind.

Es kann auch vorgesehen sein, dass nur ein Druckförderelement über einen Antrieb bewegbar ist, wobei das weitere Druckförderelement (beispielsweise als passive Rolle ausgebildet) passiv über das angetriebene Druckförderelement angetrieben wird und mit der Vorschubbewegung mitläuft.

Vorzugsweise ist vorgesehen, dass wenigstens ein mit der Schweißvorrichtung verbindbarer Haltegriff vorgesehen ist, wobei der wenigstens eine Haltegriff über wenigstens eine Verbindungsvorrichtung in unterschiedlichen Positionen relativ zur Schweißvorrichtung positionierbar ist.

Dies ergibt besonders im Einsatzgebiet des Tunnelbaus oder Tiefbaus den großen Vorteil, dass die Schweißvorrichtung an unterschiedliche Einsatzgebiete (vertikal, über Kopf oder andere Winkellagen) angepasst werden kann.

Indem ein Haltegriff in unterschiedlichen Positionen gegenüber der Schweißvorrichtung positionierbar ist, kann ein Bediener stets die einfachste und beste Möglichkeit wählen, um die Schweißvorrichtung zu halten.

Weiters ist es über die Positioniermöglichkeit des Haltegriffs an der Schweißvorrichtung gestattet, die Schweißvorrichtung an unterschiedliche Einsatzgebiete anzupassen, sodass die Schweißvorrichtung auch durch engere Höhenabmessungen durchbewegt werden kann, indem der Haltegriff in eine Position gebracht wird, in welcher die Höhenabmessung der Schweißvorrichtung verkleinert wird. Dies ist beispielsweise im Tunnelbau oder Tiefbau erforderlich, wenn die Schweißvorrichtung entlang der Tunnelwand (oder sonstigen vertikal oder annähernd vertikal ausgerichteten Wänden) zwischen Tunnelwand und einer Baumaschine und/oder einem Baugerüst und/oder anderwärtigen Bauvorrichtungen bewegt werden muss.

Es kann vorgesehen sein, dass die Schweißvorrichtung als eine von einem Bediener tragbares Folienschweißgerät ausgebildet ist. Ein tragbares Folienschweißgerät ist dabei dermaßen zu verstehen, dass das Folienschweißgerät Abmessungen und Gewichte aufweist, welche einem Bediener mit durchschnittlicher Körperfitness zumutbar ist.

Es kann vorgesehene sein, dass die Fügevorrichtung als Einspannvorrichtung ausgebildet ist. Somit kann die Fügevorrichtung und die Einspannvorrichtung beispielsweise ident ausgebildet sein.

Es kann vorgesehen sein, dass die Schweißvorrichtung eine einstellbare Höheneinstellung aufweist, welche dazu ausgebildet ist, eine Höhe zwischen einem Untergrund und/oder einer Kunststofflage einerseits und dem Schweißgerät andererseits einzustellen. Durch eine entsprechende Höhenverstellung kann das Schweißgerät an unterschiedliche Einsatzgebiete (beispielsweise den Tunnelbau und/oder Tiefbau und/oder das Verschweißen einer Teichfolie) angepasst werden.

Weitere Einzelheiten und Vorteile der Erfindung werden anhand der Figurenbeschreibung unter Bezugnahme auf die Figuren im Folgenden näher erläutert. Darin zeigen:
- Fig. 1: ein erstes Ausführungsbeispiel einer Schweißvorrichtung,
- Fig. 2a, 2b: eine Anwendung eines Halteelementes aus Fig. 1,
- Fig. 3: eine Detailansicht der Fig. 2b,
- Fig. 4a, 4b: das Heizelement der Fig. 1 in einer Schweißstellung und einer Wartestellung,
- Fig. 5a-5c: eine Vorwärmvorrichtung entsprechend dem Ausführungsbeispiel der Fig. 1,
- Fig. 6: ein alternatives Ausführungsbeispiel zu Fig. 5a,
- Fig. 7a-7c: verschiedenen Positionen eines Haltegriffs des Ausführungsbeispiel der Fig. 1, und
- Fig. 8a, 8b: die Höhenverstellung des Ausführungsbeispiels der Fig. 1 in verschiedenen Positionen.

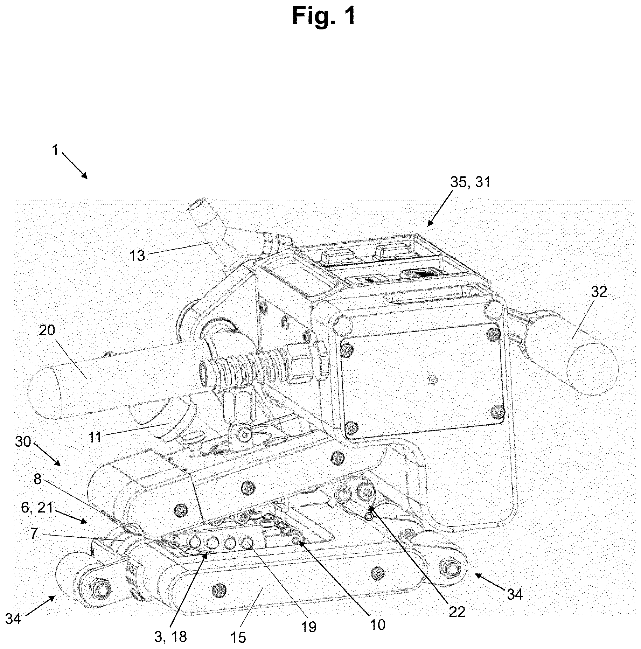

Fig. 1 zeigt ein erstes Ausführungsbeispiel einer Schweißvorrichtung 1 in einer Schließstellung 30 der Fügevorrichtung 6.

Die Schweißvorrichtung 1 weist eine Heizvorrichtung 3 auf, welche als Heizkeil 18 ausgebildet ist und über eine Vielzahl von Heizpatronen 19 verfügt.

Diese Heizvorrichtung 3 ist in diesem Ausführungsbeispiel zwischen zwei thermoplastischen Kunststofflagen 2 führbar (wobei die thermoplastischen Kunststofflagen 2 in Fig. 1 zur besseren Übersichtlichkeit nicht dargestellt sind).

In einer Vorschubrichtung 9, dem Heizkeil 18 folgend (in Fig. 1 nach rechts), weist die Schweißvorrichtung 1 eine Fügevorrichtung 6 auf, welche bei diesem Ausführungsbeispiel gleichzeitig die Einspannvorrichtung 21 darstellt.

Die Fügevorrichtung 6 verfügt über zwei Druckrollen 7, 8, welche an den Kunststofflagen 2 anlegbar sind und über welche die Kunststofflagen 2 mit einem definierten Druck (Fügedruck) anpressbar sind.

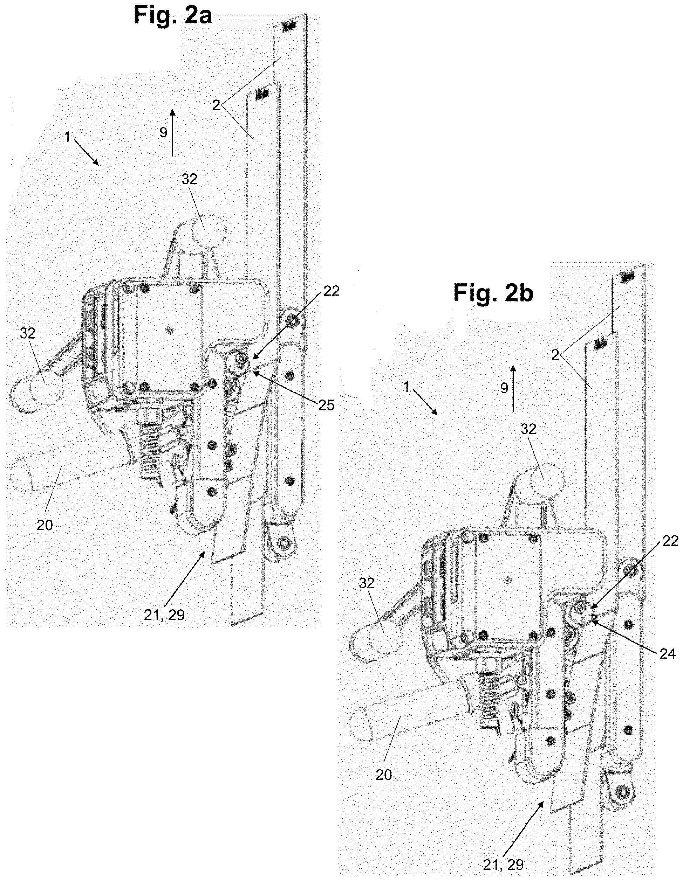

Die Druckrollen 7, 8 befinden sich in diesem Ausführungsbeispiel in einer Schließstellung 30, welche über einen Exzenterhebel 20 in eine Öffnungsstellung 29 (vergleiche hierzu Figuren 2a, 2b) übergeführt werden können.

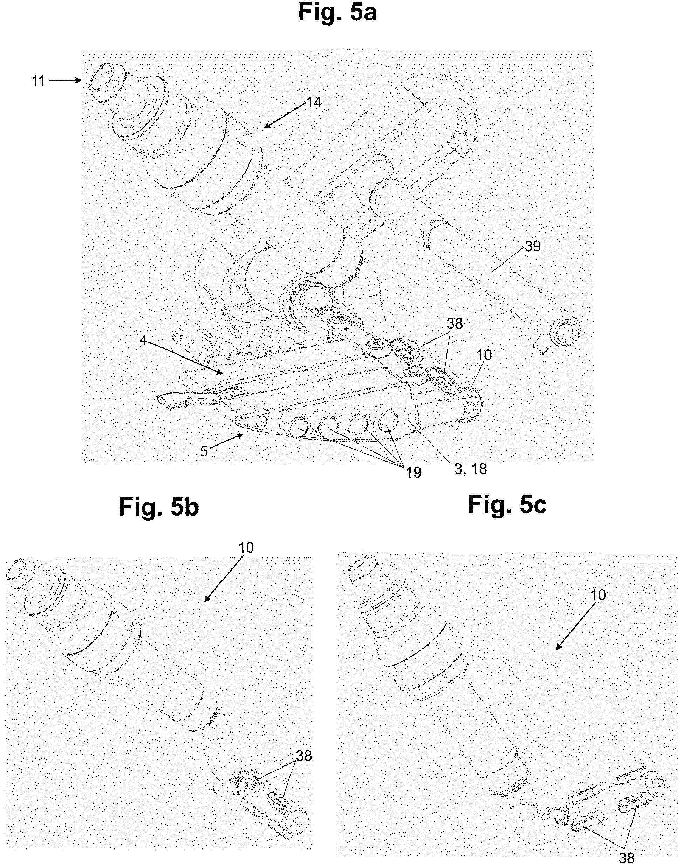

Weiters weist die dargestellte Schweißvorrichtung 1 der Fig. 1 eine Vorwärmvorrichtung 10 auf, welche über eine Heißluftzuführvorrichtung 11 mit Heißluft versorgt werden kann und diese an die thermoplastischen Kunststofflagen 2 für eine kontaktlose Vorwärmung weiterleiten kann (vergleiche hierzu auch Figuren 5a bis 5c).

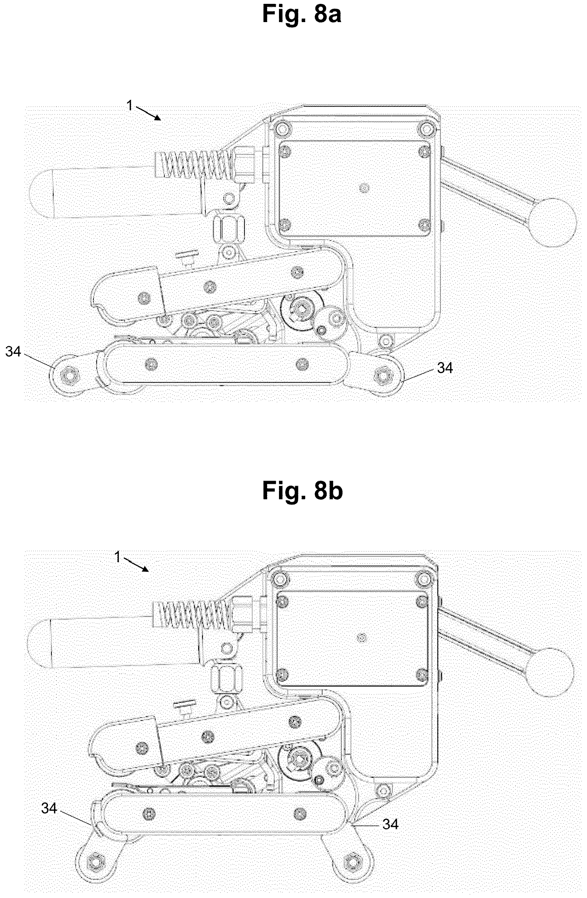

Des Weiteren weist die Schweißvorrichtung 1 der Fig. 1 eine Höhenverstellvorrichtung 34 auf, welche im Späteren in den Figuren 8a, 8b im Detail erläutert wird.

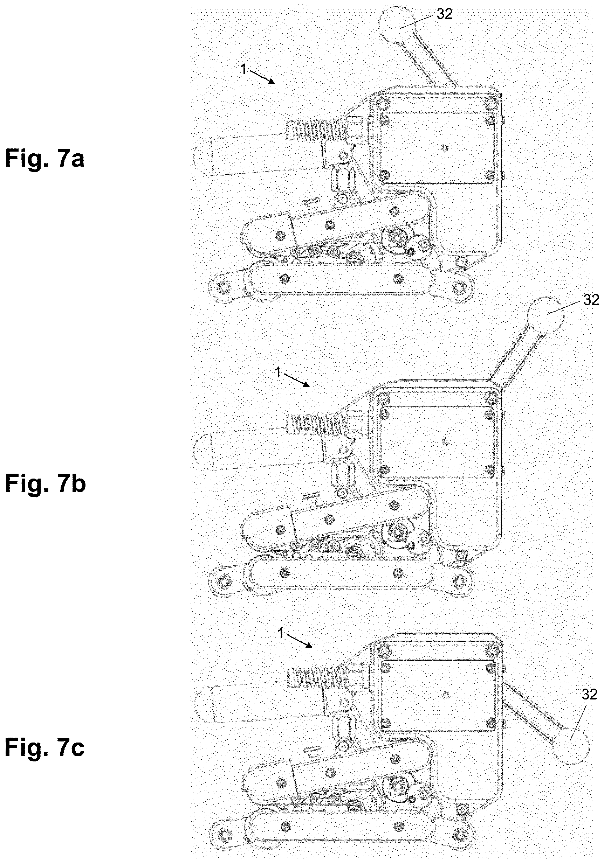

Der vorgesehene Haltegriff 32 der Schweißvorrichtung 1 der Fig. 1 kann, wie später in den Figuren 7a bis 7c, in unterschiedlichen Positionslagen zur Schweißvorrichtung 1 über die Verbindungsvorrichtung 33 angelegt werden.

Das Ausführungsbeispiel der Fig. 1 besitzt einen Rahmen 15, an welchem der Heizkeil 18 angeordnet werden kann.

Über die Steuer- oder Regeleinheit 35 (welche am Rahmen 15 angeordnet ist) können die Einzelbewegungen und Einstellungen der Schweißvorrichtung 1 vorgenommen werden.

So kann beispielsweise eine Vorschubbewegung der Druckrollen 7, 8 über die Steuer- oder Regeleinheit 35 eingestellt bzw. geregelt werden, wobei über einen Antrieb 31, welcher im Gehäuse der Steuer- oder Regeleinheit 35 angeordnet ist, die zwei Druckrollen 7, 8 über ein Getriebe gegenläufig angetrieben werden kann.

Des Weiteren ist im Gehäuse der Steuer- oder Regeleinheit 35 ein Gebläse 13 angeordnet, welches über einen Schlauch (aus Gründen der Übersichtlichkeit nicht dargestellt) mit der Heißluftzuführvorrichtung 11 der Vorerwärmung 10 verbunden werden kann, um einen Luftstrom für die Vorerwärmung zu liefern.

Des Weiteren weist das Ausführungsbeispiel aus Fig. 1 ein Halteelement 22 auf, welches von der Einspannvorrichtung 21 separat ausgebildet ist.

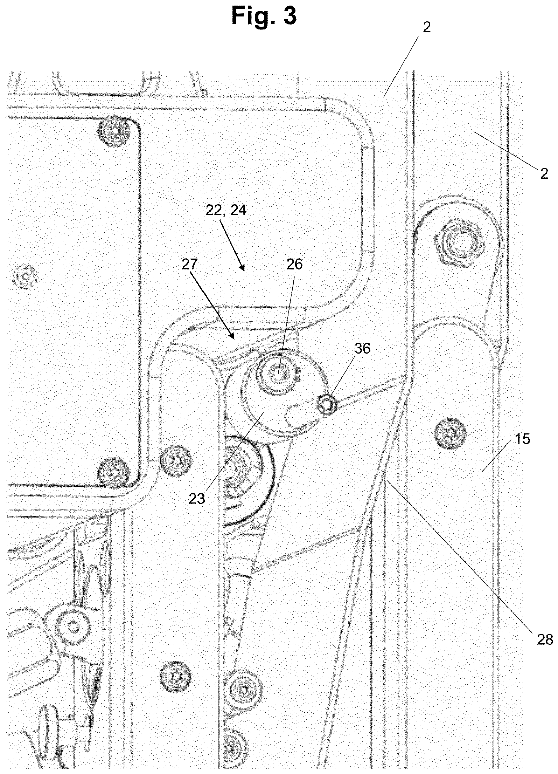

Die Anwendung dieses Halteelementes 22 des Ausführungsbeispiels der Fig. 1 soll im Weiteren durch die Fig. 2a, 2b und Fig. 3 im Detail erläutert werden.

Fig. 2a zeigt die Haltevorrichtung 22 in einer Lösestellung 25, wobei das zylindrische Halteelement 23 der Haltevorrichtung 22 an einem Anschlag 27, welcher durch das Gehäuse der Steuer- oder Regeleinheit 35 ausgebildet ist, anliegt und mit den thermoplastischen Kunststofflagen 2, (welche in diesen Figuren angedeutet sind) nicht in Kontakt steht.

Die Einspannvorrichtung 21 (welche durch die Fügevorrichtung 6 ausgeführt ist) verharrt in diesen Figuren in einer Öffnungsstellung 29. Die Einspannvorrichtung kann über den Exzenterhebel 20 zwischen einer Öffnungsstellung 29 und einer Schließstellung 30 bewegt werden.

Durch die Figuren 2a, 2b soll nun der spezielle Einsatz im Tunnelbau und/oder Tiefbau einer Schweißvorrichtung 1 verdeutlicht werden, wobei die Schweißvorrichtung 1 an einer Tunnelwand mit den zwei vertikal liegenden, thermoplastischen Kunststofflagen 2 von einem Bediener in Eingriff zu bringen ist.

So kann von einem Bediener in einem ersten Schritt (wie durch Fig. 2a gezeigt ist) die Schweißvorrichtung 1 über die Haltegriffe 32 bezüglich einer ersten thermoplastischen Kunststofflage 2 (in diesem Ausführungsbeispiel die obere - der Schweißvorrichtung 1 zugeneigte - Kunststofflage 2) in Position gebracht werden.

Anschließend kann vom Bediener die Haltevorrichtung 22 aus einer Lösestellung 25 (wie durch Fig. 2a gezeigt ist) in eine Haltestellung 24 (wie sie durch Fig. 2b gezeigt ist) übergeführt werden.

In dieser Haltestellung 24, befindet sich das Halteelement 23 der Haltevorrichtung 22 in Eingriff mit der ersten Kunststofflage 2, wobei durch die exzentrische Lagerung des Halteelements 23 der Haltevorrichtung 22 das Halteelement 23 mit der Kunststofflage 2 an einer Gegenfläche 28 (welche in diesem Ausführungsbeispiel durch den Rahmen 15 ausgebildet ist) verkeilt wird. Die Schweißvorrichtung 1 wird somit gegenüber einer Bewegung entgegen der Vorschubrichtung 9 (bzw. einer Relativbewegung gegenüber der thermoplastischen Kunststofflagen 2 entgegen der Vorschubrichtung 9) gesichert.

Im näheren Detail wird diese Haltestellung der Haltevorrichtung 22 nochmals in Fig. 3 dargestellt, wobei hierbei eine Detailansicht der Fig. 2b zu erkennen ist.

So ist in Fig. 3 das zylindrisch ausgebildete Halteelement 23 der Haltevorrichtung 22 in einer Haltestellung 24 erkennbar. Das zylindrisch ausgebildete Halteelement 23 ist über die exzentrische Lagerung 26 am Rahmen 15 der Schweißvorrichtung 1 befestigt.

Über das Bedienerelement 36 kann der Bediener das Halteelement 23 aus einer Lösestellung 25 (in welcher das Halteelement am durch das Gehäuse der Steueroder Regeleinheit 35 ausgebildeten Anschlag 27 anliegt) in eine Haltestellung 24 übergeführt werden.

In dieser Haltestellung 24 liegt das Halteelement 23 an der thermoplastischen Kunststofflage 2 an, welche thermoplastische Kunststofflage 2 wiederum an der Gegenfläche 28 anliegt. Die Gegenfläche 28 ist in diesem Ausführungsbeispiel durch eine Oberfläche des Rahmens 15 ausgebildet.

Über die exzentrische Lagerung 26 des Halteelementes 23 ist es möglich, dass sich das Halteelement 23 über die thermoplastische Kunststofflage 2 und der Gegenfläche 28 gegenüber einer Relativbewegung entgegen der Vorschubrichtung 9 verkeilt, sodass die Schweißvorrichtung 1 gegenüber einer Relativbewegung zwischen Schweißvorrichtung 2 und thermoplastischen Kunststofflage 2 entgegen der Vorschubrichtung 9 gesichert wird.

Es kann vorgesehen sein, dass ein Federelement dermaßen angeordnet ist, dass das Federelement das Halteelement 23 in der Lösestellung 25 am Anschlag 27 andrückt und in einer Haltestellung 24 gegenüber der Gegenfläche 28 andrückt, indem durch die Bewegung des Halteelements 22 das Federelement über eine Totpunktlage, welche sich zwischen Lösestellung 25 und Haltestellung 24 befindet, gestreckt wird.

Besonders günstig ist bei einer Ausführung, wie durch die Fig. 3 gezeigt ist, dass das Halteelement 23 aus einer Haltestellung 24 durch eine Vorschubbewegung der Schweißvorrichtung 1 gegenüber der thermoplastischen Kunststofflagen 2 lösbar ist, sodass sich das Halteelement 23 automatisch - wenn die Vorschubbewegung der Schweißvorrichtung 1 gestartet wird - löst.

Es ist zu erkennen, dass durch die Haltevorrichtung 22 eine einfache Möglichkeit für den Bediener geschaffen wird, die Schweißvorrichtung 1 gegenüber einer Kunststofflage 2 zu sichern, sodass der Bediener, die Schweißvorrichtung 1 loslassen kann, um die zweite Kunststofflage 2 gegenüber der ersten Kunststofflage 2 und der Schweißvorrichtung 1 auszurichten.

Wenn der Bediener die zweite Kunststofflage 2 anschließend ausgerichtet hat, kann er über den Exzenterhebel 20 die Einspannvorrichtung 21 (welche in diesem Ausführungsbeispiel auch als Fügevorrichtung 6 ausgebildet ist) geschlossen werden, indem die Druckrollen 7, 8 aneinander herangeführt werden und die zwei thermoplastischen Kunststofflagen 2 mit einem definierten Fügedruck aneinanderpressen.

Es kann auch vorgesehen sein, dass die Steuer- oder Regeleinheit 35 dazu ausgebildet ist, eine Vorschubbewegung der Druckrollen 7, 8 über den Antrieb 31 zu starten, wenn über den Exzenterhebel 20 die Fügevorrichtung 6 und/oder die Einspannvorrichtung 21 in eine Schließstellung 30 übergeführt wird.

Über einen entsprechenden Sensor, welcher eine Position zwischen den Druckrollen 7, 8, der Fügevorrichtung 6 oder der Einspannvorrichtung 21 ermittelt, kann ein Signal erfasst werden, ob eine Schließstellung 30 erreicht ist. Dieses Signal kann mittels der Steuer- oder Regeleinheit 35 ausgewertet werden. Wenn eine Schließstellung 30 erreicht ist kann die Steuer- oder Regeleinheit 35 über eine entsprechende Ansteuerung des Antriebs 31 ein automatisches Starten der Vorschubbewegung der Schweißvorrichtung umsetzen.

Ein solcher automatischer Start der Vorschubbewegung hat den Vorteil, dass sich die Schweißvorrichtung 1 automatisch bei Vorliegen eines Fügedruckes und einer Erwärmung über die Heizvorrichtung 3 in Bewegung setzt, sodass die thermoplastischen Kunststofflagen 2 nicht zu stark an einer Stelle erhitzt werden und gegebenenfalls Beschädigungen der Kunststofflagen 2 auftreten.

Um das Risiko zu minimieren, dass die thermoplastischen Kunststofflagen 2 während des Anlegens der Schweißvorrichtung 1 an die thermoplastischen Kunststofflagen 2 nicht durch die Wärmeenergie der Heizvorrichtung 3 beschädigt werden, kann es vorgesehen sein, dass die Heizvorrichtung 3 zwischen einer Schweißstellung 16 und einer Wartestellung 17 bewegbar ist.

So kann die Heizvorrichtung 3 in einer Schweißstellung 16 in Eingriff mit den zwei thermoplastischen Kunststofflagen 2 sein und sie über Kontaktwärme erhitzt.

In einer Wartestellung 17 kann die Heizvorrichtung 3 von den Kunststofflagen 2 beabstandet sein, sodass diese auch bei erhitzter Heizvorrichtung 3 nicht durch die Wärmeenergie der Heizvorrichtung 3 in Mitleidenschaft gezogen werden.

Es stellt sich als günstig heraus, wenn die Vorwärmvorrichtung 10 ebenfalls zwischen einer Schweißstellung 16 und einer Wartestellung 17 bewegbar gelagert ist, wobei auch wiederum das Risiko minimiert wird, dass die thermoplastischen Kunststofflagen 2 während des Einrichtens der Schweißvorrichtung 1 an den thermoplastischen Kunststofflagen 2 durch Wärmeenergie der Vorwärmvorrichtung 10 beschädigt werden.

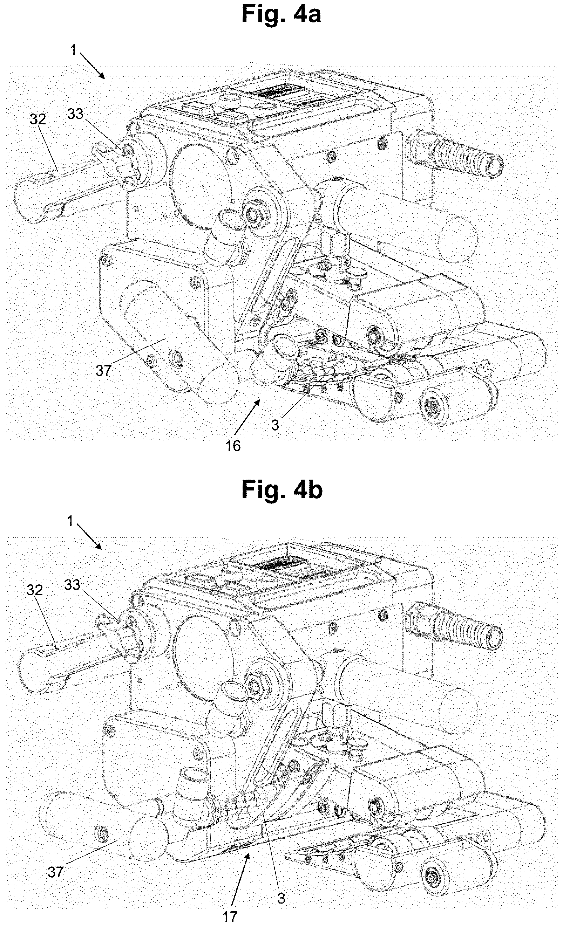

Um eine solche Ausgestaltung zu realisieren, ist die Vorwärmvorrichtung 10 des vorliegenden Ausführungsbeispiels gemeinsam mit der Heizvorrichtung 3 zwischen einer Schweißstellung 16 und einer Wartestellung 17 bewegbar, wie durch die Figuren 4a, 4b gezeigt ist.

Die Heizvorrichtung 3 und die Vorwärmvorrichtung 10 sind in diesem Ausführungsbeispiel zwischen der Schweißstellung 16 und der Wartestellung 17 über das Griffelement 37 vom Bediener überführbar.

Die Heizvorrichtung 3 und die Vorwärmvorrichtung 10 sind miteinander bewegungsschlüssig verbunden, wie im Folgenden in den Figuren 5a bis 5c genauer diskutiert werden soll.

In Fig. 5a ist es zu erkennen, wie die Vorwärmvorrichtung 10 über eine Schraubenverbindung lösbar mit der Heizvorrichtung 3 verbunden ist.

Die Heizvorrichtung 3 ist in diesem Ausführungsbeispiel als Heizkeil 18 ausgebildet.

Der Heizkeil verfügt über vier Heizpatronen 19, welche über elektrische Energie den Heizkeil 18 erwärmen und somit die Heizflächen 4, 5 erhitzen.

Über die Heizflächen 4, 5 ist anschließend jeweils eine thermoplastische Kunststofflage 2 erwärmbar und auf eine Schweißtemperatur bringbar.

Eine erste Heizfläche 4 des Heizkeils 18 ist hierfür eben ausgebildet, wohingegen die zweite Heizfläche 5 des Heizkeils 18 bogenförmig ausgebildet ist.

Die Vorwärmvorrichtung 10 verfügt über eine Heißluftzuführvorrichtung 11, über welche ein Luftstrom über ein Gebläse 13 zuführbar ist.

Die Vorwärmvorrichtung 10 verfügt des Weiteren über einen Lufterhitzer 14, wobei der zugeführte Luftstrom diesen Lufterhitzer 14 durchläuft und dabei erhitzt wird.

Der Lufterhitzer 14 kann beispielsweise durch Heizdrähte ausgebildet sein, wobei durch elektrische Energie die Heizdrähte erwärmt werden und die durchgeführte Luft durch die Heizdrähte erhitzt wird. Alternativ können auch keramische Heizelemente verwendet werden.

Anschließend kann über die Vorwärmvorrichtung 10 - genauer gesagt: die Austrittsöffnungen 38 - die erhitzte Luft an die thermoplastischen Kunststofflagen 2 herangeführt werden, wobei diese Austrittsöffnungen 38 die erwärmte Luft an die thermoplastischen Kunststofflagen 2 in Vorschubrichtung 9 vor der Heizvorrichtung 3 heranführen.

Über die Vorwärmvorrichtung 10 kann somit eine kontaktlose Vorerwärmung der Kunststofflagen 2 vorgenommen werden, um gegebenenfalls vorliegende Flüssigkeiten auf den thermoplastischen Kunststofflagen 2 durch Verdampfung zu entfernen.

Weiters kann durch die Vorerwärmungsvorrichtung 10 an den thermoplastischen Kunststofflagen 2 anliegende Verschmutzungen über den erwärmten Luftstrom von den thermoplastischen Kunststofflagen abgeblasen werden.

Die Heizvorrichtung 3 und die mit der Heizvorrichtung 3 bewegungsschlüssig verbundene Vorwärmvorrichtung 10 können über die Führungswelle 39 mit dem Rahmen 15 der Schweißvorrichtung 1 verbunden werden, wobei über die Führungswelle 39 dieser Gesamtblock der Erwärmung an der Schweißvorrichtung 1 zwischen einer Schweißstellung 16 und einer Wartestellung 17 bewegbar gelagert ist (vergleiche hierzu Fig. 4a, 4b).

Ein weiterer Effekt der Vorwärmvorrichtung 10 ist die Vorerwärmung selbst, wobei die thermoplastischen Kunststofflagen 2 bereits vor der Heizvorrichtung 3 vorgewärmt werden, sodass die Heizvorrichtung 3 vergleichsmäßig weniger Wärmeenergie an die Kunststofflagen 2 zuführen muss, um diese auf eine gewünschte Schweißtemperatur zu bringen. Dies ermöglicht die Schweißung mit einer höheren Vorschubgeschwindigkeit oder einen geringeren Wärmeenergieeintrag über die Heizvorrichtung 3.

Die Figuren 5b und 5c zeigen die Vorwärmvorrichtung 10 aus der Fig. 5a in verschiedenen perspektivischen Ansichten, sodass erkannt werden kann, dass die Vorwärmvorrichtung 10 an einer Oberseite und einer Unterseite Austrittsöffnungen 38 aufweist, womit eine thermoplastische Kunststofflage 2, welche in späterer Folge an der ersten Heizfläche 4, und eine thermoplastische Kunststofflage 2, welche in späterer Folge an der zweiten Heizfläche 5 anliegt, vorerwärmt werden kann.

Es ist zu erkennen, dass die Austrittsöffnungen 38 so ausgerichtet sind, dass an den thermoplastischen Kunststofflagen 2 anliegende Verschmutzungen abgeblasen werden können. Das heißt, die Oberfläche der thermoplastischen Kunststofflagen 2 wird nicht genau senkrecht angeströmt, sondern in einem stumpfen Winkel (schräg).

Weiters können die Austrittsöffnungen 38 durch ihre düsenförmige Ausgestaltung (den sich verjüngenden Querschnitt in Richtung der Austrittsöffnung 38) die Strömungsgeschwindigkeit der austretenden Heißluft erhöhen, um den Effekt zu erhöhen.

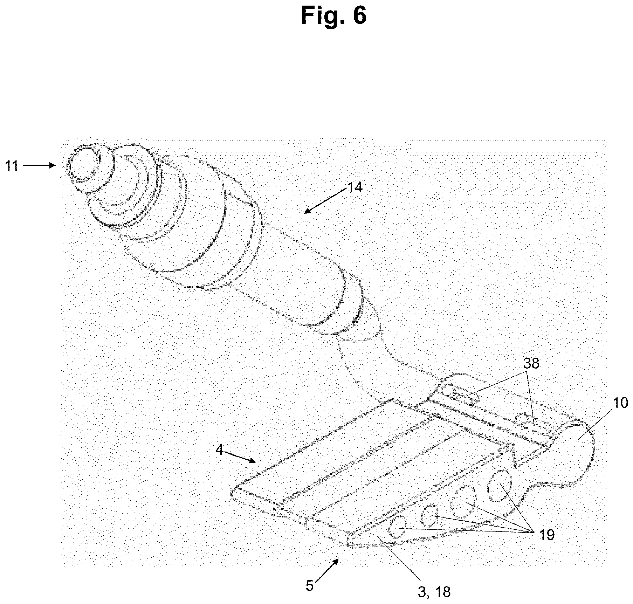

Fig. 6 zeigt ein alternatives Ausführungsbeispiel zur Fig. 5a, bei welchem der Heizkeil 18 und die Vorwärmvorrichtung 10 einstückig ausgebildet ist und denselben Grundkörper aufweisen.

Die verbleibenden Bauteile der Fig. 6 (abgesehen vom gemeinsamen Grundkörper der Heizvorrichtung 3 und der Vorerwärmungsvorrichtung 10) entsprechen denen der Fig. 5a.

Fig. 7a bis 7c zeigen die bereits aus den vorhergehenden Figuren bekannte Ausführungsvariante der Schweißvorrichtung 1 mit einem Haltegriff 32, welcher über eine Verbindungsvorrichtung 33 (siehe hierzu auch Fig. 4a, 4b) mit der Schweißvorrichtung 1 verbunden ist.

Über diese lösbare Verbindungsvorrichtung 33 kann der Haltegriff 32 in verschiedene Positionen gegenüber der Schweißvorrichtung 1 angeordnet werden, was gut durch die Figuren 7a bis 7c zu erkennen ist.

Diese lösbare Verbindungsvorrichtung 33, mit welcher der Haltegriff 32 in seiner Position variabel gegenüber der Schweißvorrichtung 1 wird, ergibt sich der große Vorteil, dass sich die Abmessungen und die Handhabbarkeit der Schweißvorrichtung 1 an das Einsatzgebiet angepasst werden kann, wie es beispielsweise im Tunnelbau und/oder Tiefbau besonders vorteilhaft ist.

So kann der Haltegriff 32 jeweils entsprechend positioniert werden, je nachdem, ob die Schweißvorrichtung 1 vertikal, horizontal oder auch Überkopf vom Bediener an die thermoplastischen Kunststofflagen 2 angelegt werden muss oder gehalten werden muss.

Des Weiteren lässt sich durch die variable Positionierung des Haltegriffs 32 die Abmessung bezüglich der Höhe (vergleiche hierzu besonders Fig. 7a mit Fig. 7c) der Schweißvorrichtung 1 variiert werden, wobei es besonders im Tunnelbau und/oder Tiefbau des Öfteren erforderlich ist, dass die Schweißvorrichtung 1 zwischen den kleinen Spaltmaßen zwischen Tunnelbaumaschinen und Tunnelwand oder Tunnelwand und Arbeitsplattformen hindurchfahren kann.

Wie bereits zu Anfang der Figurenbeschreibung erwähnt, weist die Schweißvorrichtung 1 der Fig. 1 eine Höhenverstellung 34 auf, wobei über die Höhenverstellung 34 ein Abstand zwischen einer ersten thermoplastischen Kunststofflage 2 und/oder einem Untergrund einerseits und der Schweißvorrichtung 1 andererseits verändert werden kann.

Dies ist besonders deutlich durch die Figuren 8a und 8b zu erkennen, wobei Fig. 8a eine abgesenkte Stellung der Höhenverstellung 34 der Schweißvorrichtung 1 darstellt, welche für den Tunnelbau und/oder Tiefbau erforderlich ist.

Fig. 8b zeigt einen angehobenen Zustand der Schweißvorrichtung 1 über die Höhenverstellung 34, wie es beispielsweise für den Tagebau oder auch für das Verschweißen von Teichfolien erforderlich ist.

Zur Verstellung der Höhenverstellung 34 (vergleiche hierzu auch Fig. 1) können die Rollen über eine Schraubenverbindung abgeschraubt werden und in einer versetzten Position wieder am Rahmen 15 der Schweißvorrichtung 1 angeschraubt werden.

Durch das wie in Fig. 1 besonders gut zu erkennende Bohrmuster der Höhenverstellung 34 lässt sich die Höhenverstellung variabel an das Einsatzgebiet anpassen.

### Bezugszeichenliste:

- 1: Schweißvorrichtung
- 2: thermoplastische Kunststofflage
- 3: Heizvorrichtung
- 4: erste Heizfläche
- 5: zweite Heizfläche
- 6: Fügevorrichtung
- 7: Druckrolle
- 8: Druckrolle
- 9: Vorschubrichtung
- 10: Vorwärmvorrichtung
- 11: Heißluftzuführvorrichtung
- 12: Oberfläche der Kunststofflage
- 13: Gebläse
- 14: Lufterhitzer
- 15: Rahmen
- 16: Schweißstellung
- 17: Wartestellung
- 18: Heizkeil
- 19: Heizpatrone
- 20: Exzenterhebel
- 21: Einspannvorrichtung
- 22: Haltevorrichtung
- 23: Halteelement
- 24: Haltestellung
- 25: Lösestellung
- 26: exzentrische Lagerung
- 27: Anschlag
- 28: Gegenfläche
- 29: Öffnungsstellung
- 30: Schließstellung
- 31: Antrieb
- 32: Haltegriff
- 33: Verbindungsvorrichtung
- 34: Höhenverstellung
- 35: Steuer- oder Regeleinheit
- 36: Betätigungselement
- 37: Griffelement
- 38: Austrittsöffnung
- 39: Führungswelle

## Patentansprüche

1. Verwendung einer Schweißvorrichtung (1) im Tunnelbau und/oder Tiefbau, wobei zur Abdichtung gegenüber einer Umgebung Kunststofflagen (2) entlang einer Oberfläche durch die Schweißvorrichtung (1) miteinander verschweißt werden, wobei die Schweißvorrichtung (1) zum Verschweißen von thermoplastischen Kunststofflagen (2) folgendes umfasst:
- eine Heizvorrichtung (3) mit wenigstens einer Heizfläche (4,5), wobei die Schweißvorrichtung (1) dazu ausgebildet ist, die Kunststofflagen (2) durch Kontaktwärmeübertragung zwischen der wenigstens einen Heizfläche (4,5) und den Kunststofflagen (2) zu erhitzen,
- eine Fügevorrichtung (6), vorzugsweise mit wenigstens zwei Druckrollen (7,8), wobei die Fügevorrichtung (6) dazu ausgebildet ist, zum Fügen der Kunststofflagen (2) eine Druckkraft auf die Kunststofflagen (2) auszuüben,
**dadurch gekennzeichnet, dass** in Bezug auf eine Vorschubrichtung (9) vor der Heizvorrichtung (3) eine Vorwärmvorrichtung (10) vorgesehen ist, welche zum kontaktlosen Vorwärmen der Kunststofflagen (2) ausgebildet ist.

2. Verwendung einer Schweißvorrichtung (1) nach Anspruch 1, wobei die Vorwärmvorrichtung (10) wenigstens eine Heißluftzufuhrvorrichtung (11) aufweist, welche dazu ausgebildet ist, erhitzte Luft zur Vorwärmung der Kunststofflagen (2) an eine Oberfläche (12) der Kunststofflagen (2) zu leiten.

3. Verwendung einer Schweißvorrichtung (1) nach einem der Ansprüche 1 oder 2, wobei die Vorwärmvorrichtung (10)
- wenigstens ein Gebläse (13), vorzugsweise wenigstens einen Axialventilator, zum Fördern eines Luftstroms und/oder
- wenigstens einen Lufterhitzer (14), vorzugsweise beinhaltend elektrische Heizdrähte und/oder ein keramisches Heizelement, zur Erwärmung des Luftstroms aufweist.

4. Verwendung einer Schweißvorrichtung (1) nach wenigstens einem der Ansprüche 1 bis 3, wobei die Vorwärmvorrichtung (10) mit der Heizvorrichtung (3) bewegungsschlüssig verbunden und/oder verbindbar ist.

5. Verwendung einer Schweißvorrichtung (1) nach wenigstens einem der Ansprüche 1 bis 4, wobei die Vorwärmvorrichtung (10) relativ zu einem Rahmen (15) der Schweißvorrichtung (1) zwischen einer Schweißstellung (16) und einer Wartestellung (17) bewegbar ist, wobei die Vorwärmvorrichtung (10) in der Schweißstellung (16) zum kontaktlosen Vorwärmen der Kunststofflagen (2) ausgerichtet ist und in der Wartestellung (17) von den Kunststofflagen (2) weg gerichtet ist.

6. Verwendung einer Schweißvorrichtung (1) nach wenigstens einem der Ansprüche 1 bis 5, wobei die Heizvorrichtung (3) zwei im Wesentlichen keilförmig zueinander angeordnete Heizflächen (4,5) aufweist.

7. Verwendung einer Schweißvorrichtung (1) nach wenigstens einem der Ansprüche 1 bis 6, wobei die Heizvorrichtung (3) elektrisch ausgebildet ist und vorzugsweise wenigstens ein elektrisches Heizelement aufweist.

8. Verwendung einer Schweißvorrichtung (1) nach wenigstens einem der Ansprüche 1 bis 7, wobei die Schweißvorrichtung (1) eine Einspannvorrichtung (21), vorzugsweise mit wenigstens zwei Druckrollen (7,8), aufweist, wobei die Einspannvorrichtung (21) zum Festlegen und Vorschieben der Schweißvorrichtung (1) an den Kunststofflagen (2) ausgebildet ist, wobei eine von der Einspannvorrichtung (21) separate Haltevorrichtung (22) vorgesehen ist, welche dazu ausgebildet ist, die Schweißvorrichtung (1) an einer der Kunststofflagen (2) lösbar zu sichern.

9. Verwendung einer Schweißvorrichtung (1) nach Anspruch 8, wobei die Haltevorrichtung (22) der Schweißvorrichtung (1) wenigstens ein - vorzugsweise zylindrisch ausgebildetes - Halteelement (23) aufweist, welches zwischen einer Haltestellung (24) und einer Lösestellung (25) bewegbar gelagert ist, wobei die Schweißvorrichtung (1) in einer Haltestellung (24) an einer der Kunststofflagen (2) gegen Relativbewegungen zwischen der Schweißvorrichtung (1) und der Kunststofflage (2) gesichert ist.

10. Verwendung einer Schweißvorrichtung (1) nach Anspruch 9, wobei das wenigstens eine Halteelement (23) eine exzentrische Lagerung (26) aufweist und ferner eine Gegenfläche (28) vorgesehen ist, wobei das Halteelement (23) und die Gegenfläche (28) so angeordnet sind, dass die Kunststofflage (2) in der Haltestellung (24) zwischen dem Halteelement (23) und der Gegenfläche (28) verklemmt, wenn die Kunststofflage (2) zwischen dem Halteelement (23) und der Gegenfläche (28) angeordnet ist und relativ zur Schweißvorrichtung (1) entgegen der Vorschubrichtung (9) bewegt wird.

11. Verwendung einer Schweißvorrichtung (1) nach Anspruch 9 oder 10, wobei die Haltevorrichtung (22) in eine Richtung auf den Anschlag (27) federbelastet ist.

12. Verwendung einer Schweißvorrichtung (1) nach Anspruch 11, wobei die Haltevorrichtung (22) in Richtung auf die Lösestellung (25) federbelastet ist und zwischen der Haltestellung (24) und der Lösestellung (25) eine Totpunktlage gegenüber Federbelastung vorliegt.

13. Verwendung einer Schweißvorrichtung (1) nach wenigstens einem der Ansprüche 1 bis 12, wobei die Fügevorrichtung (6) und/oder die Einspannvorrichtung (21) wenigstens zwei Druckförderelemente - vorzugsweise in Form der wenigstens zwei Druckrollen (7,8) - aufweist, welche zwischen einer Öffnungsstellung (29) und einer Schließstellung (30) bewegbar gelagert sind, wobei die Fügevorrichtung (6) und/oder die Einspannvorrichtung (21) dazu ausgebildet ist, die Kunststofflagen (2) in der Schließstellung (30) aneinander zu pressen.

14. Verwendung einer Schweißvorrichtung (1) nach Anspruch 13, wobei die wenigstens zwei Druckförderelemente wenigstens einen - vorzugsweise über ein Getriebe mit den wenigstens zwei Druckförderelementen verbundenen - Antrieb (31) aufweisen, wobei die wenigstens zwei Druckförderelemente durch den wenigstens einen Antrieb (31) gegenläufig zueinander in Richtung einer Vorschubbewegung (9) der Schweißvorrichtung (1) antreibbar sind.

15. Verwendung einer Schweißvorrichtung (1) nach wenigstens einem der Ansprüche 1 bis 14, wobei die Schweißvorrichtung (1) wenigstens ein mit der Schweißvorrichtung (1) verbindbarer Haltegriff (32) aufweist, wobei der wenigstens eine Haltegriff (32) über wenigstens eine Verbindungsvorrichtung (33) in unterschiedlichen Positionen relativ zur Schweißvorrichtung (1) positionierbar ist.

16. Verwendung einer Schweißvorrichtung (1) nach wenigstens einem der Ansprüche 1 bis 15, wobei
- die Schweißvorrichtung (1) als ein von einem Bediener tragbares Folienschweißgerät ausgebildet ist,
- die Fügevorrichtung (6) als Einspannvorrichtung (21) ausgebildet ist, und/oder
- die Schweißvorrichtung (1) eine einstellbare Höhenverstellung (34) aufweist, welche dazu ausgebildet ist, eine Höhe zwischen einem Untergrund und/oder einer Kunststofflage (2) einerseits und der Schweißvorrichtung (1) andererseits einzustellen.

## Claims

1. Use of a welding device (1) in tunnel construction and/or underground construction, wherein plastic layers (2) are welded together along a surface by the welding device (1) to seal against an environment, wherein the welding device (1) comprises the following for welding thermoplastic plastic layers (2):
- a heating device (3) with at least one heating surface (4,5), wherein the welding device (1) is formed to heat the plastic layers (2) by contact heat transfer between the at least one heating surface (4,5) and the plastic layers (2),
- a joining device (6), preferably with at least two pressure rollers (7,8), wherein the joining device (6) is formed to exert a compressive force on the plastic layers (2) to join the plastic layers (2),
**characterized in that** a preheating device (10), which is formed for the contactless preheating of the plastic layers (2), is provided upstream of the heating device (3) in relation to a feed direction (9).

2. Use of a welding device (1) according to claim 1, wherein the preheating device (10) has at least one hot-air supply device (11), which is formed to channel heated air onto a surface (12) of the plastic layers (2) for the preheating of the plastic layers (2).

3. Use of a welding device (1) according to one of claims 1 or 2, wherein the preheating device (10) has
- at least one blower (13), preferably at least one axial fan, to convey an air current and/or
- at least one air heater (14), preferably containing electric heating wires and/or a ceramic heating element, to heat the air current.

4. Use of a welding device (1) according to at least one of claims 1 to 3, wherein the preheating device (10) is connected and/or connectable to the heating device (3) in a movement-locking manner.

5. Use of a welding device (1) according to at least one of claims 1 to 4, wherein the preheating device (10) is movable relative to a frame (15) of the welding device (1) between a welding position (16) and a standby position (17), wherein the preheating device (10) is aligned for the contactless preheating of the plastic layers (2) in the welding position (16) and is directed away from the plastic layers (2) in the standby position (17).

6. Use of a welding device (1) according to at least one of claims 1 to 5, wherein the heating device (3) has two heating surfaces (4,5) arranged substantially wedge-shaped relative to each other.

7. Use of a welding device (1) according to at least one of claims 1 to 6, wherein the heating device (3) is formed electrical and preferably has at least one electric heating element.

8. Use of a welding device (1) according to at least one of claims 1 to 7, wherein the welding device (1) has a clamping device (21), preferably with at least two pressure rollers (7,8), wherein the clamping device (21) is formed to fix and advance the welding device (1) on the plastic layers (2), wherein a retaining device (22) separate from the clamping device (21) is provided, which is formed to releasably secure the welding device (1) on one of the plastic layers (2).

9. Use of a welding device (1) according to claim 8, wherein the retaining device (22) of the welding device (1) has at least one retaining element (23) - preferably formed cylindrical - which is mounted movable between a retaining position (24) and a release position (25), wherein in a retaining position (24) the welding device (1) is secured on one of the plastic layers (2) against relative movements between the welding device (1) and the plastic layer (2).

10. Use of a welding device (1) according to claim 9, wherein the at least one retaining element (23) has an eccentric mounting (26) and furthermore a counter surface (28) is provided, wherein the retaining element (23) and the counter surface (28) are arranged such that in the retaining position (24) the plastic layer (2) is clamped between the retaining element (23) and the counter surface (28) when the plastic layer (2) is arranged between the retaining element (23) and the counter surface (28), and is moved against the feed direction (9) relative to the welding device (1).

11. Use of a welding device (1) according to claim 9 or 10, wherein the retaining device (22) is spring-loaded in a direction onto the limit stop (27).

12. Use of a welding device (1) according to claim 11, wherein the retaining device (22) is spring-loaded in the direction of the release position (25) and there is a dead-centre position with respect to spring loading between the retaining position (24) and the release position (25).

13. Use of a welding device (1) according to at least one of claims 1 to 12, wherein the joining device (6) and/or the clamping device (21) has at least two pressure conveying elements - preferably in the form of the at least two pressure rollers (7,8) - which are mounted movable between an open position (29) and a closed position (30), wherein the joining device (6) and/or the clamping device (21) is formed to press the plastic layers (2) against each other in the closed position (30).

14. Use of a welding device (1) according to claim 13, wherein the at least two pressure conveying elements have at least one drive (31) - preferably connected to the at least two pressure conveying elements via a gear mechanism - wherein the at least two pressure conveying elements can be driven in opposite directions relative to each other in the direction of a feed movement (9) of the welding device (1) by the at least one drive (31).

15. Use of a welding device (1) according to at least one of claims 1 to 14, wherein the welding device (1) has at least one retaining grip (32) that can be connected to the welding device (1), wherein the at least one retaining grip (32) can be positioned in different positions relative to the welding device (1) via at least one connecting device (33).

16. Use of a welding device (1) according to at least one of claims 1 to 15, wherein
- the welding device (1) is formed as a film welder that can be carried by a user,
- the joining device (6) is formed as a clamping device (21), and/or
- the welding device (1) has a settable height adjustment (34), which is formed to set a height between a substrate and/or a plastic layer (2) on the one hand and the welding device (1) on the other hand.

## Revendications

1. Utilisation d'un dispositif de soudage (1) dans la construction de tunnels et/ou dans les travaux de génie civil, dans laquelle pour l'étanchéification par rapport à un environnement, des couches en matière synthétique (2) sont soudées les unes aux autres par le dispositif de soudage le long d'une surface, dans laquelle le dispositif de soudage (1) destiné à souder des couches en matière synthétique (2) thermoplastique comprend ce qui suit :
- un dispositif de chauffage (3) avec au moins une face de chauffage (4, 5), dans laquelle le dispositif de soudage (1) est réalisé pour réchauffer les couches en matière synthétique (2) par transfert de chaleur par contact entre l'au moins une face de chauffage (4, 5) et les couches en matière synthétique (2),
- un dispositif d'assemblage (6), de préférence avec au moins deux rouleaux de compression (7, 8), dans laquelle le dispositif d'assemblage (6) est réalisé pour exercer une force de compression sur les couches en matière synthétique (2) pour assembler les couches en matière synthétique (2),
**caractérisée en ce qu'**est prévu, par rapport à une direction d'avancement (9) devant le dispositif de chauffage (3), un dispositif de préchauffage (10), lequel est réalisé pour préchauffer sans contact les couches en matière synthétique (2) .

2. Utilisation d'un dispositif de soudage (1) selon la revendication 1, dans laquelle le dispositif de préchauffage (10) présente au moins un dispositif d'amenée d'air chaud (11), lequel est réalisé pour acheminer de l'air réchauffé pour le préchauffage des couches en matière synthétique (2) sur une surface (12) des couches en matière synthétique (2).

3. Utilisation d'un dispositif de soudage (1) selon l'une quelconque des revendications 1 ou 2, dans laquelle le dispositif de préchauffage (10) présente
- au moins une soufflante (13), de préférence au moins un ventilateur axial, pour refouler un flux d'air, et/ou
- au moins un réchauffeur d'air (14), de préférence contenant des fils métalliques de chauffage électriques et/ou un élément de chauffage en céramique, pour réchauffer le flux d'air.

4. Utilisation d'un dispositif de soudage (1) selon au moins l'une quelconque des revendications 1 à 3, dans laquelle le dispositif de préchauffage (10) est relié et/ou peut être relié par liaison de mouvement au dispositif de chauffage (3) .

5. Utilisation d'un dispositif de soudage (1) selon au moins l'une quelconque des revendications 1 à 4, dans laquelle le dispositif de préchauffage (10) peut être déplacé entre une position de soudage (16) et une position d'attente (17) par rapport à un cadre (15) du dispositif de soudage (1), dans laquelle le dispositif de préchauffage (10) est orienté dans la position de soudage (16) pour préchauffer sans contact les couches en matière synthétique (2) et est dirigé de manière à s'éloigner des couches en matière synthétique (2) dans la position d'attente (17).

6. Utilisation d'un dispositif de soudage (1) selon au moins l'une quelconque des revendications 1 à 5, dans laquelle le dispositif de chauffage (3) présente deux faces de chauffage (4, 5) disposées sensiblement en forme de coin l'une par rapport à l'autre.

7. Utilisation d'un dispositif de soudage (1) selon au moins l'une quelconque des revendications 1 à 6, dans laquelle le dispositif de chauffage (3) est réalisé de manière électrique et présente de préférence au moins un élément de chauffage électrique.

8. Utilisation d'un dispositif de soudage (1) selon au moins l'une quelconque des revendications 1 à 7, dans laquelle le dispositif de soudage (1) présente un dispositif d'enserrage (21), de préférence avec au moins deux rouleaux de compression (7, 8), dans laquelle le dispositif d'enserrage (21) est réalisé pour immobiliser et faire avancer le dispositif de soudage (1) sur les couches en matière synthétique (2), dans laquelle un dispositif de maintien (22) séparé du dispositif d'enserrage (21) est prévu, lequel est réalisé pour bloquer de manière amovible le dispositif de soudage (1) sur une des couches en matière synthétique (2).

9. Utilisation d'un dispositif de soudage (1) selon la revendication 8, dans laquelle le dispositif de maintien (22) du dispositif de soudage (1) présente au moins un élément de maintien (23) - réalisé de préférence de manière cylindrique -, lequel est monté de manière à pouvoir être déplacé entre une position de maintien (24) et une position de desserrage (25), dans laquelle le dispositif de soudage (1) est bloqué, dans une position de maintien (24), sur une des couches en matière synthétique (2) pour empêcher des déplacements relatifs entre le dispositif de soudage (1) et la couche en matière synthétique (2).

10. Utilisation d'un dispositif de soudage (1) selon la revendication 9, dans laquelle l'au moins un élément de maintien (23) présente un support (26) excentrique et en outre une contre-face (28) est prévue, dans laquelle l'élément de maintien (23) et la contre-face (28) sont disposés de telle sorte que la couche en matière synthétique (2) se coince dans la position de maintien (24) entre l'élément de maintien (23) et la contre-face (28) lorsque la couche en matière synthétique (2) est disposée entre l'élément de maintien (23) et la contre-face (28) et est déplacée à l'encontre de la direction d'avancement (9) par rapport au dispositif de soudage (1).

11. Utilisation d'un dispositif de soudage (1) selon la revendication 9 ou 10,
dans laquelle
le dispositif de maintien (22) est soumis à la contrainte d'un ressort en direction de la butée (27).

12. Utilisation d'un dispositif de soudage (1) selon la revendication 11, dans laquelle le dispositif de maintien (22) est soumis à la contrainte d'un ressort en direction de la position de desserrage (25) et une position de point mort par rapport à la contrainte de ressort est présente entre la position de maintien (24) et la position de desserrage (25).

13. Utilisation d'un dispositif de soudage (1) selon au moins l'une quelconque des revendications 1 à 12, dans laquelle le dispositif d'assemblage (6) et/ou le dispositif d'enserrage (21) présente de préférence deux éléments de refoulement par compression - de préférence sous la forme des au moins deux rouleaux de compression (7, 8), lesquels sont montés de manière à pouvoir être déplacés entre une position d'ouverture (29) et une position de fermeture (30), dans laquelle le dispositif d'assemblage (6) et/ou le dispositif d'enserrage (21) sont réalisés pour presser les unes sur les autres les couches en matière synthétique (2) dans la position de fermeture (30).

14. Utilisation d'un dispositif de soudage (1) selon la revendication 13, dans laquelle les au moins deux éléments de refoulement par compression présentent au moins un entraînement (31) - de préférence relié aux au moins deux éléments de refoulement par compression par l'intermédiaire d'un engrenage, dans laquelle les au moins deux éléments de refoulement par compression peuvent être entraînés par l'au moins un entraînement (31) en sens inverse l'un par rapport à l'autre en direction d'un déplacement d'avancement (9) du dispositif de soudage (1).

15. Utilisation d'un dispositif de soudage (1) selon au moins l'une quelconque des revendications 1 à 14, dans laquelle le dispositif de soudage (1) présente au moins une poignée de maintien (32) pouvant être reliée au dispositif de soudage (1), dans laquelle l'au moins une poignée de maintien (32) peut être positionnée par rapport au dispositif de soudage (1) dans différentes positions par l'intermédiaire d'au moins un dispositif de liaison (33).

16. Utilisation d'un dispositif de soudage (1) selon au moins l'une quelconque des revendications 1 à 15, dans laquelle
- le dispositif de soudage (1) est réalisé en tant qu'un appareil de soudage de film pouvant être porté par un opérateur,
- le dispositif d'assemblage (6) est réalisé en tant que dispositif d'enserrage (21),
et/ou
- le dispositif de soudage (1) présente un système d'ajustement en hauteur (34) réglable, lequel est réalisé pour régler une hauteur entre un sol et/ou une couche en matière synthétique (2) d'une part et le dispositif de soudage (1) d'autre part.
